# EUROPÄISCHE PATENTSCHRIFT

(11) **EP 0 481 030 B1**
(45) Veröffentlichungstag und Bekanntmachung des Hinweises auf die Patenterteilung: **08.06.1994**
(21) Anmeldenummer: 91907156.3
(22) Anmeldetag: 28.03.1991
(51) Int. Cl.: B04C 7/00, B04C 3/06, B01D 45/12

(54) **WIRBELKAMMERABSCHEIDER**
SWIRL CHAMBER SEPARATOR
SEPARATEUR A CHAMBRE DE TURBULENCE

(30) Priorität: 30.03.1990 DE 4010238
(43) Veröffentlichungstag der Anmeldung: 22.04.1992
(73) Patentinhaber: Bielefeldt, Ernst-August, Dipl.-Ing., 24582 Bordesholm (DE)
(72) Erfinder: Bielefeldt, Ernst-August, Dipl.-Ing., 24582 Bordesholm (DE)
(74) Vertreter: Schmidt-Bogatzky, Jürgen, Dr.-Ing. Huth, Dietrich & Partner
(86) Internationale Anmeldenummer: EP9100607
(87) Internationale Veröffentlichungsnummer: WO9115301

(56) Entgegenhaltungen:
- EP-A- 0 249 023
- AT-B- 383 052
- DE-A- 2 945 951
- DE-A- 3 203 498
- DE-A- 3 223 374

## Beschreibung

Die Erfindung betrifft einen Wirbelkammerabscheider mit mindestens einer Wirbelkammer und jeweils zwei Tauchrohren nach dem Oberbegriff des Anspruchs 1. Ein derartiger Wirbelkammerabscheider ist bereits aus AT-B-38 30 52 bekannt.

Ein ein weiteres Beispiel für einen Wirbelkammerabscheider ist z. B. in der DE-A1 32 03 498 beschrieben. Dieser hat wie auch andere bekannt gewordene Wirbelkammerabscheider den Nachteil, daß aufgrund von Strömungsverlusten in dem Wirbelkammerabscheider dessen Abtrennleistung bezogen auf den Energieeinsatz relativ gering ist und die zur Steigerung der Abtrennleistung häufig erforderlichen Mehrkammeranordnungen ein relativ großes Bauvolumen haben. Hierdurch ist der Einsatzbereich dieser bekannten Wirbelkammerabscheider begrenzt.

Die Aufgabe der Erfindung besteht darin, den Wirbelkammerabscheider der eingangs genannten Art so zu verbessern, daß bei Verminderung der Strömungsverluste die Abtrennleistung der Wirbelkammer verbessert und bei Ein- und Mehrkammeranordnungen bei gesteigerter Abtrennleistung eine Verringerung des Bauvolumens erzielt wird.

Erfindungsgemäß erfolgt die Lösung der Aufgabe durch die kennzeichnenden Merkmale des Anspruchs 1. Vorteilhafte Ausgestaltungen der Erfindung werden in den abhängigen Ansprüchen beschrieben. Diese mit einem Tauchrohrspiralgehäuse, Krümmern und Diffusoren zur Reingasabsaugung ausgestatteten Wirbelkammern ermöglichen geringste Gesamtdruckverluste so daß die Wirbelkammern sehr niedrige Verlustbeiwerte aufweisen. Nach der Erfindung werden hinsichtlich der geometrischen Abmessungen bestimmte Verhältnisse eingehalten. Wirbelkammerdurchmesser d, Tauchrohrdurchmesser dt und Wirbelkammerhöhe h werden vorteilhaft über eine Ringquerschnittskennzahl χ miteinander verknüpft, die das Seitenverhältnis des Querschnittes des Wirbelringraumes beschreibt. Die Ringquerschnittskennzahl χ ₒₚₜ wird durch die Beziehung (d-dt)/(2h))min definiert. Für die Ringquerschnittskennzahl χ ₒₚₜ ist ein möglichst kleiner Wert anzustreben. Hierdurch wird der Vorteil geringsten Wirbelvolumens bei konstantem Wirbelkammerdurchmesser d und damit verbundenen minimalen Wirbeldruckverlusten im Wirbelraum der Wirbelkammer erzielt. χ ₒₚₜ wird möglichst so klein gewählt, daß der Sekundärfluß gerade noch erhalten bleibt, um die Schraubenströmungszone an den Tauchrohren mit ihrem hohen Trennvermögen und damit Abscheideleistung zu erhalten. Die Schraubenströmungszone ist ringförmig um die Tauchrohre angeordnet und bildet die Feinabtrennzone der Wirbelkammer. Die Schraubenstromlinien erzeugen an den Partikeln Partikelabtrennkräfte mit zwei aufeinander senkrecht stehenden Komponenten. Radial wirkt die Zentrifugalkraft der Wirbelströmung in ihrer vollen Größe als Partikelverschiebungskraft. Axial wirkt die Strömungsschleppkraft des Sekundärflusses an den Partikeln. Anzustreben ist, daß die Zentrifugalkräfte an den Partikeln möglichst groß und die Strömungsschleppkräfte möglichst klein werden. Das ergibt geringe Steigungen der Schraubenstromlinien mit hohen Verschiebungskräften (=Zentrifugalkräften) bei großen Verweilzeiten der Partikeln in der Feinabtrennzone. Es werden hierdurch hohe Trennleistungen erzielt. Von Vorteil ist es, Wirbelkammern so auszubilden, daß der Quotient aus Tauchrohrdurchmesser dt und Wirbelkammerdurchmesser d nahe 1 beträgt. Grundsätzlich gilt für dt/d ≦ 1. Bei diesem gewählten Verhältnis werden die gesamten Druckverluste gesenkt bzw. bei konstanten zugelassenen Druckverlusten höhere Strömungsgeschwindigkeiten in der Wirbelkammer möglich. Hierdurch werden die Abscheideleistungen erhöht und der Gasdurchsatz der Wirbelkammer gesteigert. Weiterhin wird die Baugröße und damit das Bauvolumen einer Wirbelkammer bei konstantem Gasdurchsatz vermindert. Als weitere Größe ist der Quotient aus Wirbelkammerdurchmesser d und Wirbelkammerhöhe h zu berücksichtigen. Der Quotient d/h sollte möglichst größer als 1 sein und kann 2 bis 3 betragen. Hierdurch wird bei konstantem Gasdurchsatz die radiale Dicke der Schraubenströmungszone an den Tauchrohren verringert, die die Feinabtrennzone bildet. Die minimale Ringquerschnittszahl χ ist dann erzielt, wenn in dem Wirbelringraum gerade noch eine Sekundärströmung auftritt. Im Einzelfall muß die minimale Ringquerschnittszahl χ experimentell ermittelt werden, da diese von verschiedenen Parametern wie z. B. geometrischen Größen der Wirbelkammer, der Wandrauhigkeit, der Staubbeladung des Rohgases usw. abhängt.

Dadurch werden die Partikel in kürzerer Zeit aus der Feinabtrennzone radial verschoben, wodurch die Abscheideleistung der Wirbelkammer erhöht wird. Andererseits ergeben sich bei konstanter Trennleistung mit konstant gehaltener radialer Dicke der Schraubenströmungszone höhere Gasdurchsätze einer Wirbelkammer mit einer dadurch möglichen Verkleinerung des Bauvolumens. Der Steigerung des Verhältnisses d/h sind aber nach oben Grenzen gesetzt. Bei zu großen d/h-Werten mit konstant gehaltener Wirbelkammerhöhe h vergrößern sich die reibenden Wandflächen des Wirbelgehäuses in einem solchen Umfang, daß dadurch die Drehimpulsverluste in der Sekundärflußzone zu stark anwachsen und so letztlich die Abscheideleistung beeinträchtigt wird. Außerdem kann die Rotationssymmetrie der Strömung ungünstig beeinflußt werden.

Die Erfindung wird im Folgenden am Beispiel der in den Zeichnungen dargestellten Ausführungsformen von Wirbelkammerabscheidern näher erläutert. Es zeigt
- Fig. 1 und 2: einen Wirbelkammerabscheider mit Staubbunker im Axial- und Radialschnitt,
- Fig. 3: einen Wirbelkammerabscheider mit einer tangentialen Partikelvolumenstromabsaugung aus dem Ringwirbelgehäuse in der Draufsicht,
- Fig. 4 und 5: eine weitere Ausbildung eines Wirbelkammerabscheiders in der Seitenansicht im Schnitt und in einem Radialschnitt im Ausschnitt,
- Fig. 6 bis 8: Ausführungsformen von Tauchrohren in schematischen Darstellungen,
- Fig. 9 bis 18: Ausführungsformen des Tauchrohrspiralgehäuses in schematischen Darstellungen,
- Fig. 19 und 20: eine Anordnung von Wirbelkammern mit einseitiger Reingasfortführung,
- Fig. 21 bis 25: verschiedene Formen von Einläufen für Wirbelkammern.

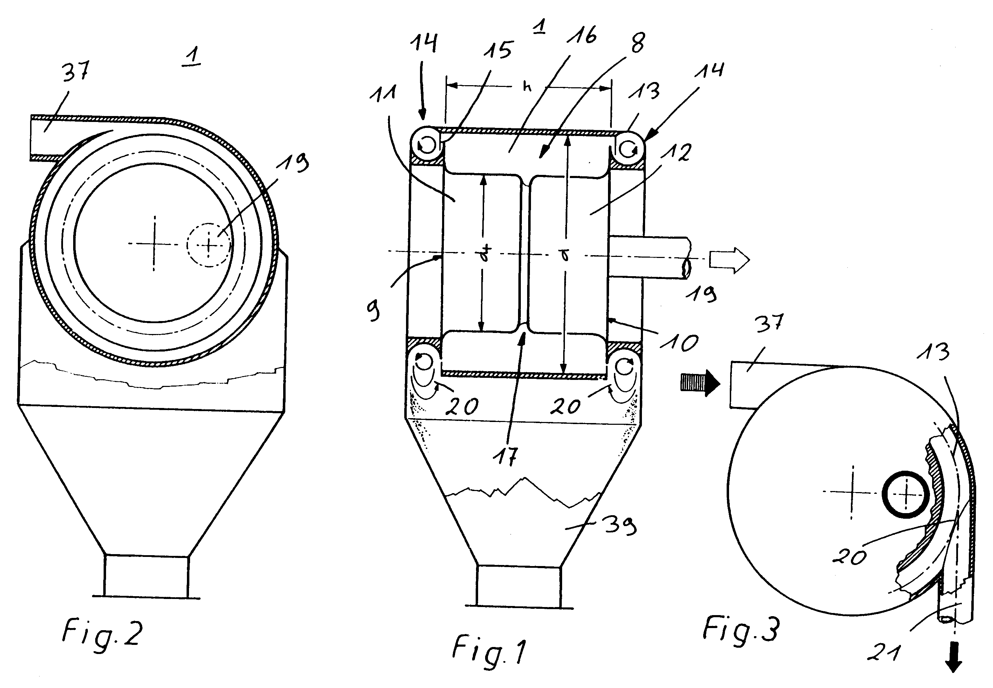

Der in Fig. 1 und 2 dargestellte Wirbelkammerabscheider 1 weist im Bereich der Endwände 9, 10 jeweils einen das betreffende Tauchrohr 11, 12 umgebenden Ringkanal 13 auf. Jeder Ringkanal 13 ist als Ringwirbelgehäuse 14 ausgebildet, das mittels einer seitlichen umlaufenden und schlitzförmigen Durchbrechung 15 mit dem die Tauchrohre 11, 12 umgebenden Wirbelringraum 16 verbunden ist. Im unteren Bereich der Ringwirbelgehäuse 14 ist jeweils eine Durchbrechung 20 vorgesehen, durch die die Ringwirbelgehäuse 14 zu einem Staubbunker 39 geöffnet sind. In den Ringwirbelgehäusen 14 wird durch die Gasströmung im Wirbelringraum 16 jeweils ein Ringwirbel erzeugt, der den Austrag von Partikeln unterstützt. Es ist auch möglich, direkt aus den Ringwirbelgehäusen 14 einen Partikelvolumenstrom abzusaugen. Hierzu ist an der Durchbrechung 20 ein Absaugrohr 21 angeordnet, das tangential zum Ringkanal 13 ausgerichtet ist (Fig. 3). In der Wirbelkammer abgetrennter Staub kann über das Absaugrohr 21 abgeführt und z. B. pneumatisch an einen Ort zur Lagerung oder Weiterverarbeitung transportiert werden. Das Ringwirbelgehäuse 14 mit tangentialer Partikelvolumenstromabsaugung kann auch als axiales oder radiales Spiralgehäuse ausgebildet werden. Hierdurch wird die Rotationssymmetrie der Partikelabsaugung aus dem Wirbelringraum 16 verbessert.

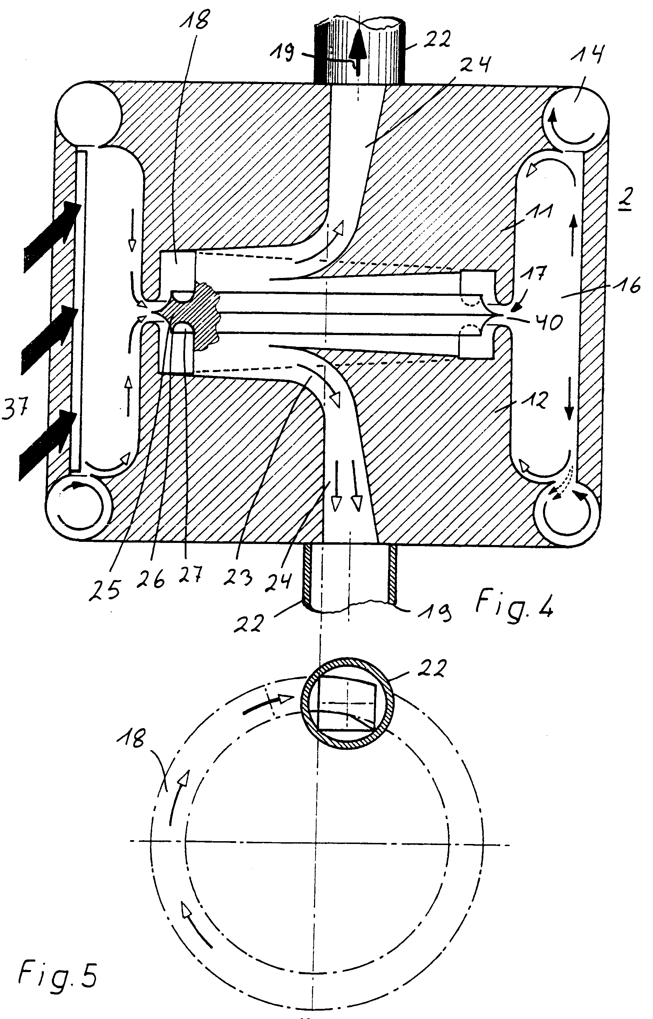

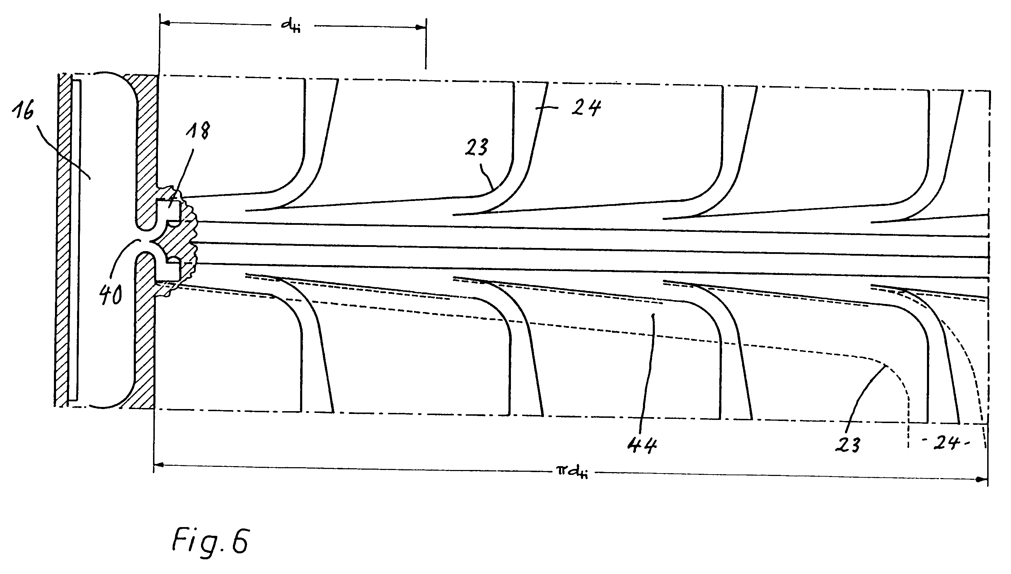

Bei dem Wirbelkammerabscheider 2 nach Fig. 4 ist im Bereich der Tauchrohrmündung 17 ein axiales Tauchrohrspiralgehäuse 18 ausgebildet. Dieses ist über einen im Bereich der Tauchrohrmündung 17 ausgebildeten Schlitz 40 mit dem Wirbelringraum 16 verbunden. An das Tauchrohrspiralgehäuse 18 schließen sich strömungsausgangsseitig zwei Krümmer 23 an, die über jeweils einen Diffusor 24 mit einem Reingasaustrittsstutzen 22 verbunden sind. Krümmer 23 und Diffusor 24 haben jeweils einen rechteckartigen Querschnitt. Aus Gründen der Bauvereinfachung kann beim Übergang in den kreisrunden Reingasaustrittstutzen durch Stoßverluste ein geringer Druckverlust hingenommen werden. Bei dieser Ausführung ist es möglich, Druckverlustbeiwerte kleiner als 0,5 zu erzielen (Fig. 4 und 5). Fig. 6 zeigt schematisch die Abwicklung eines Tauchrohrbereiches, bei dem am Tauchrohrspiralgehäuse 18 mehrere Strömungsaustritte mit jeweils einem Krümmer 23 und einem Diffusor 24 ausgebildet sind. Bei dieser Ausbildung von mehreren Spiralgehäuseaustritten wird die Rotationssymmetrie der Reingasabsaugung an der Tauchrohrmündung 17 erhöht, wobei Druckverluste vermindert werden. Stromaufwärts wirkt sich die Erhöhung der Rotationssymmetrie der Reingasabsaugung in den Wirbelringraum 16 aus und verbessert die Trennwirkung in der Feinabtrennzone um die Tauchrohre 11, 12. Um die Eintrittsströmung durch den Schlitz 40 möglichst verlustarm zu gestalten, ist am Strömungseinlauf des Tauchrohrspiralgehäuses 18 ein Strömungsleitstück 25 vorgesehen (Fig. 4). Dieses weist zwei Strömungsleitflächen 26 auf, hinter denen jeweils eine nutförmige Vertiefung 27 ausgebildet ist. Durch diese werden günstige Sekundärflußeffekte erzielt. Es ist auch möglich, die mehreren Strömungsaustritte auf dem Umfang eines axialen Tauchrohrspiralgehäuses 18 in einen Sammelkanal 44 münden zu lassen, der ausgangsseitig in einen Krümmer 23 und einen Diffusor 24 übergeht. Eine derartige Ausführung ist in Fig. 6 in Strichlinien dargestellt.

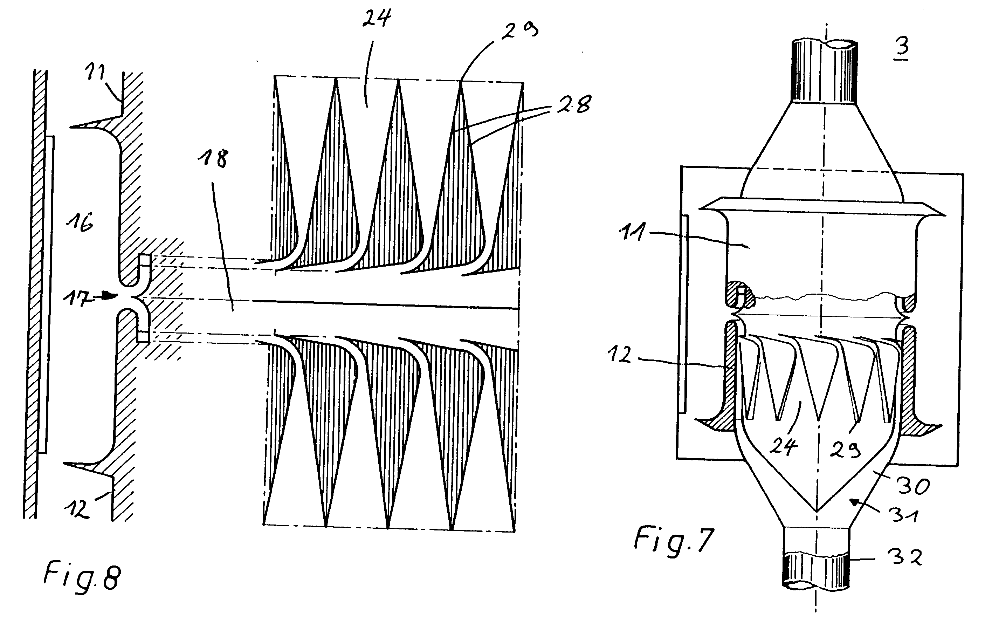

Bei dem in den Fig. 7 und 8 dargestellten Wirbelkammerabscheider 3 sind über den Tauchrohrumfang verteilt ebenfalls mehrere Diffusoren 24 angeordnet. Jeweils benachbarte Diffusorseitenwände 28 sind zu einer Spitze 29 zusammengeführt. Dieses hat den Vorteil, daß die Strömung nach Vorbeiströmen an den Spitzen 29 in einen Ringraum 30 weitergeführt werden kann. Bei dem Wirbelkammerabscheider 3 ist der Ringraum 30 als Ringdiffusor 31 ausgebildet, an dessen Spitze sich ein Rohr 32 anschließt. Bei dieser Ausbildung kann die Drehgeschwindigkeit am Tauchrohr, die in der Feinabtrennzone erhöht wurde, ab der Tauchrohrmündung 17 auf kurzer Strecke verlustarm wieder in Druck umgesetzt werden, so daß Austrittsverluste durch verlorene kinetische Energie gering gehalten werden.

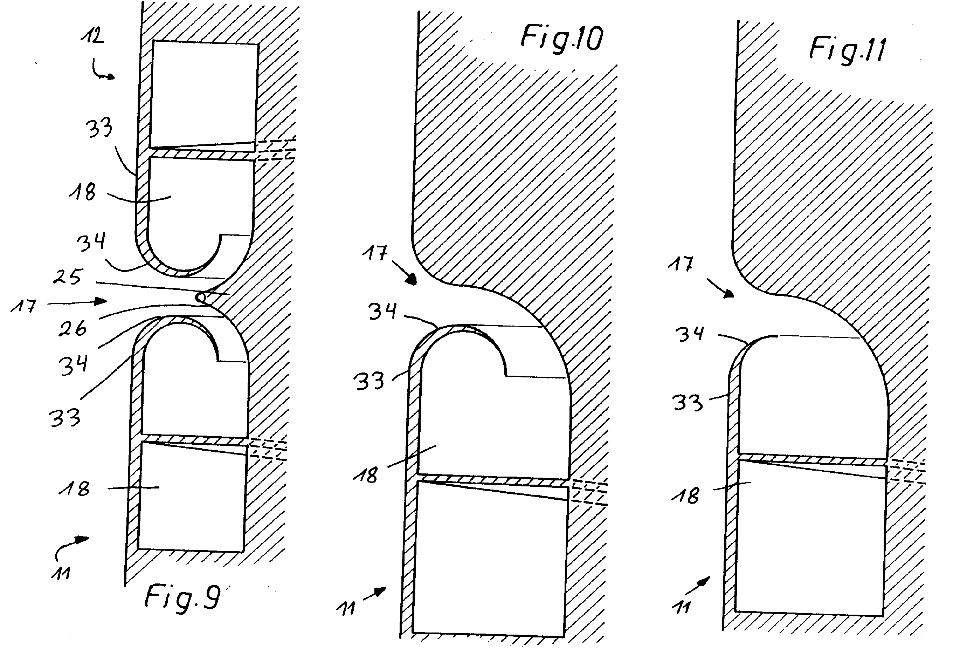

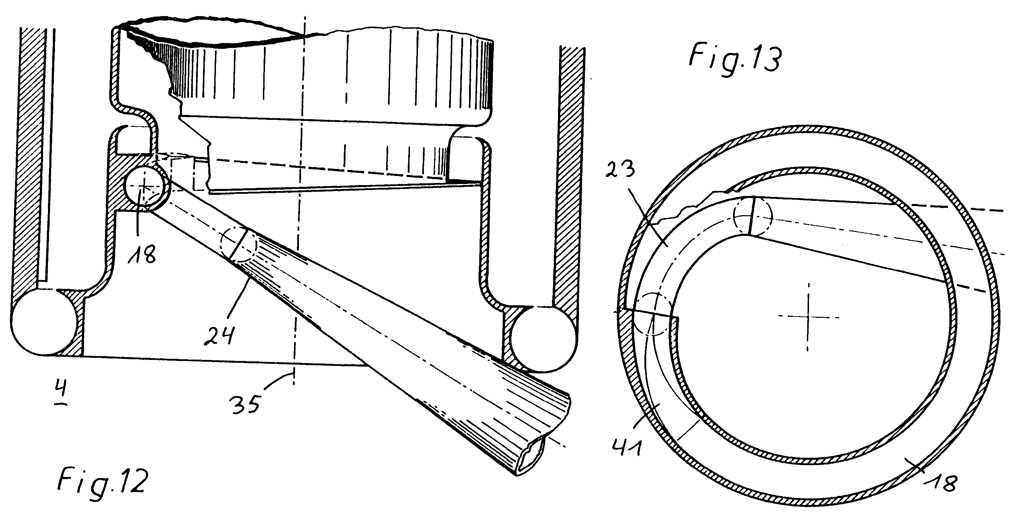

Um im Bereich der Tauchrohrmündung 17 Druckverluste für die Gasströmung beim Eintritt in das Tauchrohrspiralgehäuse 18 zu verringern, ist es von Vorteil, die die Tauchrohrmündung 17 bildenden Tauchrohrendabschnitte 33 strömungstechnisch günstig gerundet auszubilden (Fig. 9 bis 11). Soweit die Tauchrohrendabschnitte 33 die Einläufe von einem Tauchrohrspiralgehäuse 18 darstellen, können die Tauchrohrendabschnitte 33 als konkav gewölbte Zungen 34 ausgebildet sein (Fig. 9 bis 11). Wie in Fig. 9 dargestellt, ragen die konkav gewölbten Zungen 34 bis in den Bereich der Strömungsleitflächen 26 eines Strömungsleitstücks 25. Hierdurch wird gleichzeitig der Bereich der Tauchrohrmündung 17 konstruktiv vereinfacht. Die Tauchrohrmündung 17 kann auch an einer Wirbelkammer mit einem einseitigen Tauchrohrspiralgehäuse 18 ausgebildet werden (Fig. 10). Es ist auch möglich, die konkav gewölbte Zunge 34 verkürzt auszuführen (Fig. 11). Hierdurch ergeben sich weitere erhebliche konstruktive Vereinfachungen.
Die Diffusoren 24 können einen rechteckigen, rechteckartigen oder kreisförmigen Querschnitt haben. In den Fig. 12 und 13 ist ein Wirbelkammerabscheider 4 dargestellt, bei dem an dem axialen Tauchrohrspiralgehäuse 18 eine einseitige Reingasfortführung vorgesehen ist. Am Ausgang des Tauchrohrspiralgehäuses 18 ist ein Übergangsstück 41 vorgesehen, mit dem der rechteckige Strömungsquerschnitt des Tauchrohrspiralgehäuses 18 in einen kreisförmigen Strömungsquerschnitt umgewandelt wird. An das Übergangsstück 41 schließt sich ein Krümmer 23 an, der ausgangsseitig mit einem Diffusor 24 verbunden ist. Das Übergangsstück 41 kann auch in das Tauchrohrspiralgehäuse 18 integriert sein. Die Strömungsquerschnittumwandlung im Bereich des Tauchrohrspiralgehäuses 18 führt zu einer erheblichen Bauvereinfachung bei den Bauelementen zur Weiterführung der Strömung. Der anschließende Krümmer 23 kann als Kreisrohr ausgeführt und der folgende Diffusor 24 als Kreisdiffusor ausgebildet werden. Bei einer Ausrichtung des Diffusors 24 schiefwinklig zur Tauchrohrlängsachse 35 im Tauchrohrhohlraum wird ferner das Bauvolumen des Wirbelkammerabscheiders 4 vermindert. Es ist möglich, den in Fig. 12 und 13 dargestellten Wirbelkammerabscheider 4 auch mit zwei- oder mehrfachem Reingasaustrittssystem auszubilden.

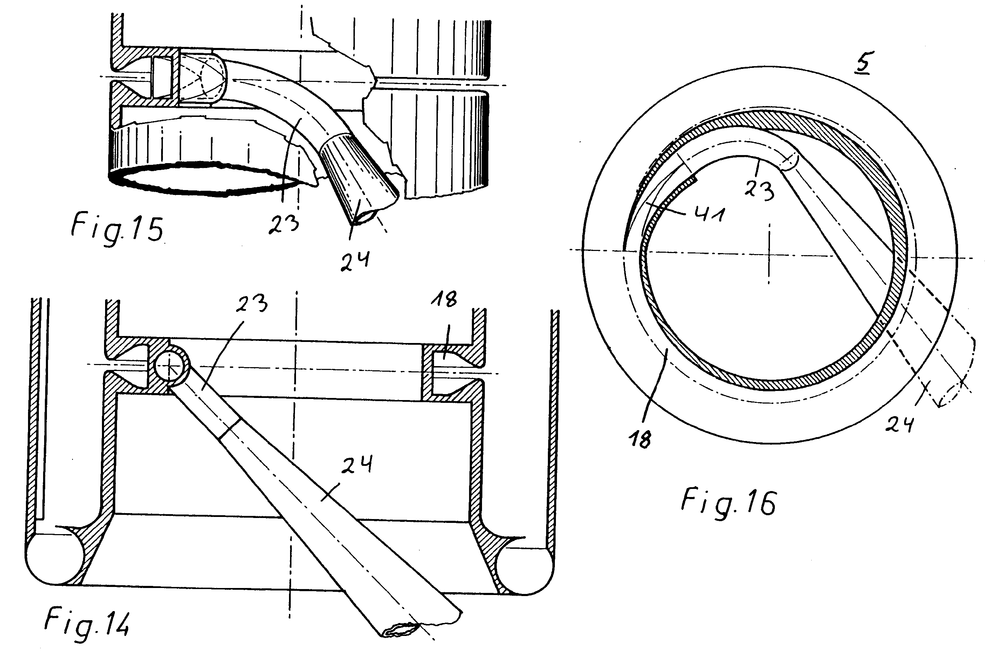

Die bisher beschriebenen Tauchrohrspiralgehäuse 18 wiesen ein axiales Spiralgehäuse auf. Es ist aber möglich, Tauchrohrspiralgehäuse 18 mit radialem Spiralgehäuse auszubilden. Ein Beispiel hierfür ist in den Fig. 14 bis 16 dargestellt, die einen Wirbelkammerabscheider 5 zeigen. Die über das radiale Spiralgehäuse des Tauchrohrspiralgehäuses 18 hinausgehenden Merkmale des Wirbelkammerabscheiders 5 entsprechen denen des Wirbelkammerabscheiders 4.

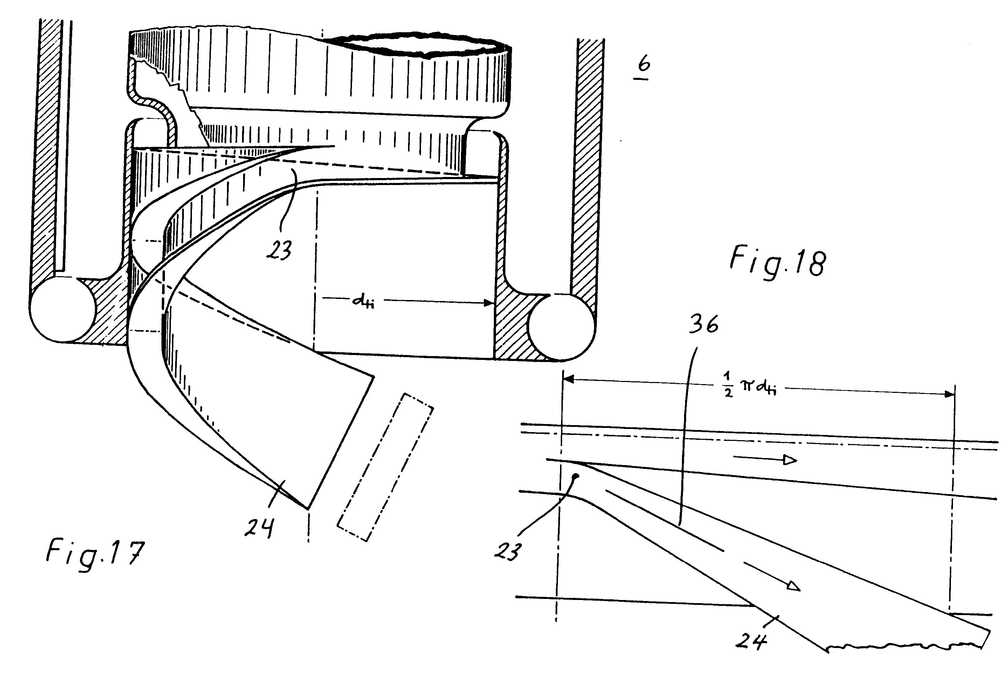

Fig. 17 zeigt einen Wirbelkammerabscheider 6 mit einem Tauchrohrspiralgehäuse 18, das ein axiales Spiralgehäuse aufweist. Die Reingasfortführung erfolgt einseitig über einen gekrümmten Diffusor 24 mit rechteckigem Querschnitt, der an einen Krümmer 23 mit ebenfalls rechteckigem Querschnitt anschließt. Der Krümmer 23 weist nur einen geringen Umlenkwinkel auf, um die Druckverluste zu vermindern (Fig. 18). Die Krümmung des Diffusors 24 mit flachem rechteckigem Querschnitt induziert im Diffusor 24 selbst eine Sekundärströmung, die den Diffusorwirkungsgrad verbessert. Dies erfolgt dadurch, daß durch die Sekundärströmung Strömungsablösungen in ablösungsgefährdeten Querschnittsbereichen des Diffusors 24 verhindert werden. Sofern eine größere Strömungsverzögerung im Diffusor 24 erwünscht ist, muß der Diffusoröffnungswinkel vergrößert werden. In diesem Fall ist es zweckmäßig, in dem Diffusor 24 ein oder mehrere Leitbleche 36 anzuordnen (Fig. 18). Hierdurch wird der Diffusor 24 strömungstechnisch in mehrere parallel wirkende Diffusoren aufgeteilt. In Diffusoren 24 mit nur rechteckartigem Querschnitt oder kreisförmigem Querschnitt können ebenfalls Leitbleche 36 vorgesehen werden. Insbesondere bei Diffusoren 24 mit kreisrundem Querschnitt können sowohl ein Leitblech 36 wie auch zwei kreuzförmig anzuordnende Leitbleche 35 eingesetzt werden. Bei Schrägführung eines Diffusors 24 mit rechteckigem Querschnitt ergibt sich als Ergebnis ein Effekt einer Krümmung, die etwa dem Tauchrohrradius entspricht.

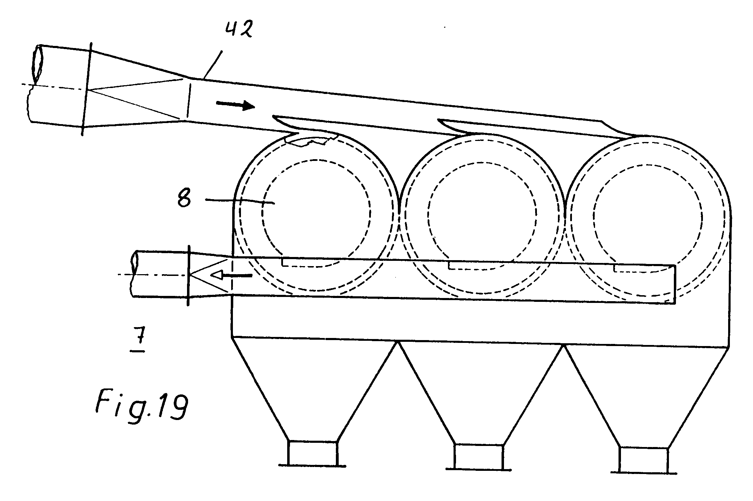

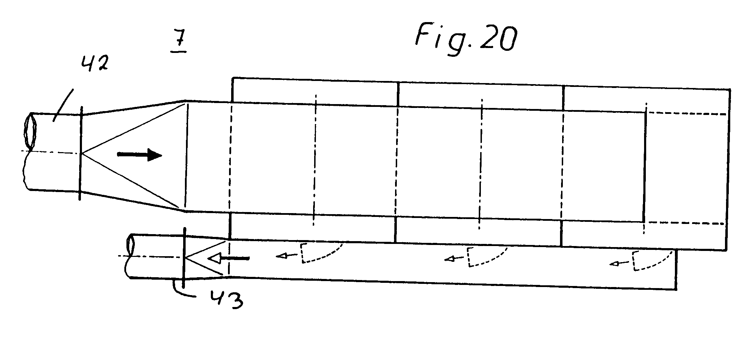

Sofern einfache Anlagen gewünscht werden, kann es von Vorteil sein, mehrere Wirbelkammern 8 zu einer Anordnung 7 zu verbinden, bei der die Reingasfortführung über einen Reingaskanal 43 einseitig erfolgt (Fig. 19 und 20). Das Rohgas wird über einen gemeinsamen Rohgaskanal 42 den Wirbelkammern 8 zugeführt.

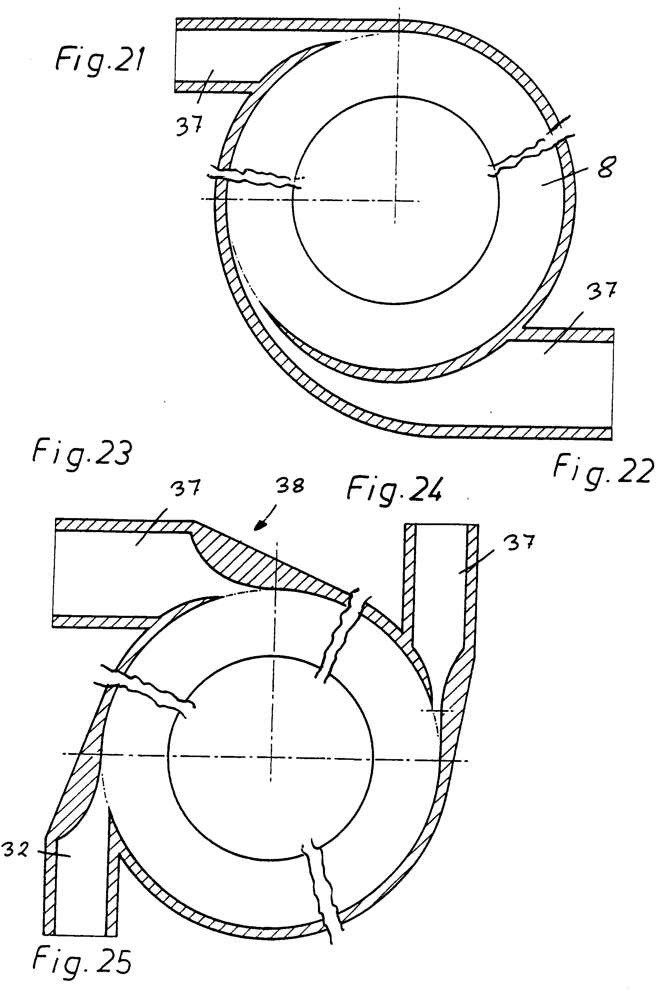

Fig. 21 bis 25 zeigt verschiedene Einlaufbauformen bei Wirbelkammern 8. Im Wirbelkammereinlaufbereich 38 ist hierzu jeder Rohgaseintrittsstutzen 37 düsenförmig ausgebildet. Hierdurch weisen alle Strömungseinläufe der Wirbelkammern 8 stärkere Kontraktionsverhältnisse der Eintrittsdüsen auf. Dies hat zur Folge, daß aufgrund vorangehender Strömungsvorgänge bestehende Turbulenz beruhigt wird, wodurch die Trenn- und Abscheideleistung einer jeden Wirbelkammer 8 erhöht wird. Von Vorteil ist es, im Wirbelkammereinlaufbereich 38 der Strömung des Rohgases eine Krümmung aufzuprägen, die der Krümmung der Strömung in der Wirbelkammer 8 entspricht. Dieses kann durch Ausführungen wie in Fig. 21 und 22 dargestellt erfolgen. Es ist aber auch möglich, düsenartige Ausbildungen wie in den Fig. 23 bis 25 vorzusehen, bei denen das in die Wirbelkammer 8 eintretende Rohgas in der Strömungsrichtung aber ebenfalls der Strömungsrichtung in der Wirbelkammer 8 angepaßt ist.

## Patentansprüche

1. Wirbelkammerabscheiber (1) mit mindestens einer Wirbelkammer (8) und jeweils zwei Tauchrohren (11, 12), die koaxial in der Wirbelkammer angeordnet sind, sich jeweils von deren Endwänden (9, 10) aufeinander zuerstrecken, mit einem Reingasauslaß (22) in Verbindung stehen und mit im Bereich der Endwände (9, 10) jeweils ein das eine Tauchrohr (11, 12) umgebender Ringkanal (13) der mittels einer umlaufenden schlitzförmigen Durchbrechung (15) mit dem die Tauchrohre (11, 12) umgebenden Wirbelringraum (16) verbunden ist, dadurch gekennzeichnet, daß der Ringkanal (13) als Ringwirbelgehäuse (14) ausgebildet ist, daß im Bereich der Tauchrohrmündung (17) ein Tauchrohrspiralgehäuse (18) ausgebildet ist, das mit dem Wirbelringraum (16) und mindestens einem Reingasauslaß (22) verbunden ist, und daß der Wirbelringraum (16) durch den Quotient d/h > als 1 und die Ringquerschnittskennzahl χ _{OPT} ≦ ((d-dt)/(2h)) min definiert ist, wobei gilt
dt = Tauchrohrdurchmesser
d = Wirbelkammerdurchmesser
h = Wirbelkammerhöhe.

2. Wirbelkammerabscheider nach Anspruch 1, dadurch gekennzeichnet, daß in jedem Ringwirbelgehäuse (14) eine Durchbrechung (20) zum Austrag von Partikeln ausgebildet ist.

3. Wirbelkammerabscheider nach Anspruch 2, dadurch gekennzeichnet, daß an jedem Ringwirbelgehäuse (14) die Durchbrechung (20) umgebend ein tangential zum Ringkanal (13) ausgerichtetes Absaugrohr (21) angeordnet ist.

4. Wirbelkammerabscheider nach Anspruch 1 bis 3, dadurch gekennzeichnet, daß das Ringwirbelgehäuse (14) mit tangentialer Partikelvolumenstromabsaugung als axiales oder radiales Spiralgehäuse ausgebildet ist.

5. Wirbelkammerabscheider nach Anspruch 1, dadurch gekennzeichnet, daß zwischen Tauchrohrspiralgehäuse (18) und dem mindestens einen Reingasaustrittstutzen (22) ein Krümmer (23) ausgebildet ist, der mit dem Tauchrohrspiralgehäuse (18) verbunden ist.

6. Wirbelkammerabscheider nach Anspruch 5, dadurch gekennzeichnet, daß der Kanalabschnitt zwischen Krümmer (23) und Reingasaustrittstutzen (22) als Diffusor (24) ausgebildet ist.

7. Wirbelkammerabscheider nach Anspruch 1, dadurch gekennzeichnet, daß am Strömungseinlauf des Tauchrohrspiralgehäuses (18) der Tauchrohrmündung (17) zugewandt ein Strömungsleitstück (25) mit einer hinter jeder Strömungsleitfläche (26) angeordneten nutförmigen Vertiefung (27) ausgebildet ist.

8. Wirbelkammerabscheider nach Anspruch 5 und 6, dadurch gekennzeichnet, daß bei Ausbildung mehrerer über den Tauchrohrumfang verteilt angeordneter Diffusoren (24) jeweils benachbarte Diffusorseitenwände (28) zu einer Spitze (29) zusammengeführt sind, an die sich ein Ringraum (30) anschließt.

9. Wirbelkammerabscheider nach Anspruch 8, dadurch gekennzeichnet, daß der Ringraum (30) als Ringdiffusor (31) ausgebildet ist, an dem sich ein Rohr (32) anschließt.

10. Wirbelkammerabscheider nach Anspruch 5 und 6, dadurch gekennzeichnet, daß die Krümmer (23) und die Diffusoren (24) einseitig an dem Tauchrohrspiralgehäuse (18) ausgebildet sind.

11. Wirbelkammerabscheider nach Anspruch 1 bis 10, dadurch gekennzeichnet, daß die die Tauchrohrmündung (17) bildenden Tauchrohrendabschnitte (33) als konkav gewölbte Zungen (34) ausgebildet sind.

12. Wirbelkammerabscheider nach Anspruch 5 und 6, dadurch gekennzeichnet, daß der Diffusor (24) einen rechteckigen, rechteckartigen oder kreisförmigen Querschnitt hat.

13. Wirbelkammerabscheider nach Anspruch 12, dadurch gekennzeichnet, daß der Diffusor (24) schiefwinklig zur Tauchrohrlängsachse (35) ausgerichtet ist.

14. Wirbelkammerabscheider nach Anspruch 1, dadurch gekennzeichnet, daß das Tauchrohrspiralgehäuse (18) als axiales oder radiales Spiralgehäuse ausgebildet ist.

15. Wirbelkammerabscheider nach Anspruch 14, dadurch gekennzeichnet, daß das als axiales Spiralgehäuse ausgebildete Tauchrohrspiralgehäuse (18) einseitig oder beidseitig ein Tauchrohr (11; 11, 12) aufweist.

16. Wirbelkammerabscheider nach Anspruch 12, dadurch gekennzeichnet, daß in jedem Diffusor (24) mit rechteckigem, rechteckartigem oder kreisförmigem Querschnitt mindestens ein Leitblech (36) ausgebildet ist.

17. Wirbelkammerabscheider nach Anspruch 1 bis 16, dadurch gekennzeichnet, daß der Rohgaseintrittsstutzen (37) im Wirbelkammereinlaufbereich (38) düsenförmig ausgebildet ist.

## Claims

1. A swirl chamber separator (1) comprising at least one swirl chamber (8) and respectively two immersion pipes (11, 12) arranged coaxially in the swirl chamber, extending respectively towards each other from the end walls (9, 10) of the chamber connected to an outlet (22) for the treated gas and having in the area of the end walls (9, 10) an annular channel (13) surrounding the respective immersion pipes (11, 12), which is connected via a slot-shaped aperture (15) with the annular swirl space (16) running round the immersion pipes (11, 12), characterised in that the annular channel (13) comprises a spiral casing (18) for the immersion pipes in the area of the immersion pipe opening, which is connected to the annular swirl space (16) and at least one outlet (22) for the treated gas, and in that the annular swirl space (16) is defined by the quotient d/h > 1 and the annular cross section index χ OPT ≦ ((d-dt)/(2h))min, in which
dt = diameter of the immersion pipe
d = diameter of the swirl chamber
h = height of the swirl chamber.

2. A swirl chamber separator in accordance with claim 1, characterised in that in each annular swirl casing (14) an aperture (20) is provided through which the particles may be discharged.

3. A swirl chamber separator in accordance with claim 2, characterised in that an aperture (20) is arranged on each annular swirl casing (14) surrounding a suction pipe positioned at a tangent to the annular channel (13).

4. A swirl chamber separator in accordance with claims 1 to 3, characterised in that the annular swirl casing (14) comprises an axial or radial spiral casing whereby the particles are discharged at a tangent by suction.

5. A swirl chamber separator in accordance with claim 1, characterised in that an elbow (23), connected to the immersion pipe spiral casing (18), is provided between the immersion pipe spiral casing (18) and at least one treated gas discharge connector (22).

6. A swirl chamber separator in accordance with claim 5, characterised in that the channel section between the elbow (23) and the treated gas discharge connector (22) comprises a diffuser (24).

7. A swirl chamber separator in accordance with claim 1, characterised in that a flow directing piece (25) with a slot-shaped recess (27) behind each flow directing surface (26) is provided on the flow inlet of the immersion pipe spiral casing (18) facing the immersion pipe opening (17).

8. A swirl chamber separator in accordance with claim 5 and 6, characterised in that several diffusers (24) are distributed over the periphery of the immersion pipe so that the respective adjacent side-walls (28) of the diffusers are brought together at a point (29), to which an annular space (30) is connected.

9. A swirl chamber separator in accordance with claim 8, characterised in that the annular space (30) comprises an annular diffuser (31), to which a pipe (32) is connected.

10. A swirl chamber separator in accordance with claim 5 and 6, characterised in that the elbow (23) and the diffusers (24) are arranged on one side of the immersion pipe spiral casing (18).

11. A swirl chamber separator in accordance with claims 1 to 10, characterised in that the end sections (33) of the immersion pipe comprising the immersion pipe opening (17) are arched concave vanes (34).

12. A swirl chamber separator in accordance with claim 5 and 6, characterised in that the diffuser (24) has a right-angled, right-angled type or circular-shaped cross section.

13. A swirl chamber separator in accordance with claim 12, characterised in that the diffuser (24) is arranged at an oblique angle to the longitudinal axis (35) of the immersion pipe.

14. A swirl chamber separator in accordance with claim 1, characterised in that the immersion pipe spiral casing (18) is an axial or radial spiral casing.

15. A swirl chamber separator in accordance with claim 14, characterised in that the immersion pipe spiral casing (18) is an axial spiral casing having an immersion pipe (11; 11, 12) on one or both sides.

16. A swirl chamber separator in accordance with claim 12, characterised in that in each diffuser (24) having a right-angled, right-angled type or circular-shaped cross section at least one guide plate (36) is provided.

17. A swirl chamber separator in accordance with claim 1 to 16, characterised in that the connector for the untreated gas inlet (37) in the inlet area to the swirl chamber (38) is nozzle-shaped.

## Revendications

1. Séparateur à chambre de turbulence (1), comportant au moins une chambre de turbulence (8) et, chaque fois, deux tubes plongeurs (11, 12) disposés coaxialement dans la chambre de turbulence, dirigés chacun l'un vers l'autre depuis les parois d'extrémité (9, 10) de cette chambre, raccordés à une sortie du gaz purifié (22), et comportant chacun, dans la zone des parois d'extrémité (9, 10), un canal annulaire (13) qui entoure chacun des tubes plongeurs (11, 12) et qui est relié, par un perçage (15) périphérique en forme de fente, à l'espace annulaire de turbulence (16) entourant les tubes plongeurs (11, 12), caractéxisé en ce que le canal annulaire (13) est réalisé sous la forme d'un corps annulaire de turbulence (14), en ce que, dans la zone (17) où débouchent les tubes plongeurs, est réalisé un corps (18) de turbulence en forme de spirale, relié à l'espace annulaire de turbulence (16) et à au moins une sortie des gaz purifiés (22), et en ce que l'espace annulaire de turbulence (16) est défini par le quotient d/h > 1 et par le paramètre caractéristique de la section annulaire χ_{OPT} ≦ ((d-dt) / (2h))min, avec
dt = diamètre du tube plongeur
d = diamètre de la chambre de turbulence
h = hauteur de la chambre de turbulence

2. Séparateur à chambre de turbulence suivant la revendication 1, caractérisé en ce que, dans chaque corps annulaire de turbulence (14), est réalisée une ouverture (20) pour l'extraction de particules.

3. Séparateur à chambre de turbulence suivant la revendication 2, caractérisé en ce que, sur chaque corps annulaire de turbulence (14), l'ouverture (20) est disposée de façon à entourer un tube d'extraction (21) dirigé tangentiellement au canal annulaire (13).

4. Séparateur à chambre de turbulence suivant l'une quelconque des revendications 1 à 3, caractérisé en ce que le corps annulaire de turbulence (14) comportant une extraction tangentielle de l'écoulement volumique des particules est réalisé sous la forme d'un corps axial ou radial, en forme de spirale.

5. Séparateur à chambre de turbulence suivant la revendication 1, caractérisé en ce qu'entre le corps (18), en forme de spirale, des tubes plongeurs et le ou les raccords de sortie (22) des gaz purifiés, est réalisé un coude (23), relié au corps (18), en forme de spirale, des tubes plongeurs.

6. Séparateur à chambre de turbulence suivant la revendication 5, caractérisé en ce que la partie du canal, comprise entre le coude (23) et les raccorts de sortie (22) des gaz purifiés, est réalisée pour former un diffuseur.

7. Séparateur à chamhre de turbulence suivant la revendication 1, caractérisé en ce qu'à l'admission du corps (18), en forme de spiral, ds tubes plongeurs, est réalisé un déflecteur d'écoulement (25), tourné vers la zone de la bouche (17) des tubes plongeurs, et comportant un creux (27), en forme de rainure, disposé derrière chaque surface déflectrice (26).

8. Séparateur à chambre de turbulence suivant la revendication 5 et la revendication 6, caractérisé en ce que, dans le cas de la réalisation de diffuseurs (24) répartis sur la périphérie des tubes plongeurs, des parois latérales (28) des diffuseurs, voisines les unes des autres, sont concourrantes pour former une pointe (29), contre laquelle se trouve un espace annulaire (30).

9. Séparateur à chambre de turbulence suivant la revendication 8, caractérisé en ce que l'espace annulaire (30) est réalisé sous la forme d'un diffuseur annulaire (31), auquel fait suite un tube (32).

10. Séparateur à chambre de turbulence suivant la revendication 5 et la revendication 6, caractérisé en ce que les coudes (23) et les diffuseurs (24) sont réalisés d'un seul côté du corps (18), en forme de spirale, des tubes plongeurs.

11. Séparateur à chambre de turbulence suivant l'une quelconque des revendications 1 à 10, caractérisé en ce que les parties (33) des tubes plongeurs, formant la zone (17) où débouchent les tubes plongeurs, sont réalisées sous la forme de languettes (34) à courbure concave.

12. Séparateur à chambre de turbulence suivant la revendication 5 et la revendication 6, caractérisé en ce que le diffuseur (24) a une section rectangulaire, ou sensiblement rectangulaire, ou circulaire.

13. Séparateur à chambre de turbulence suivant la revendication 12, caractérisé en ce que le diffuseur (24) est orienté en formant un angle oblique avec l'axe longitudinal (35) des tubes plongeurs.

14. Séparateur à chambre de turbulence suivant la revendication 1, caractérisé en ce que le corps (18), en spirale, des tubes plongeurs est réalisé sous la forme d'un corps en spirale, axial ou radial.

15. Séparateur à chambre de turbulence suivant la revendication 14, caractérisé en ce que le corps (18), en spirale, des tubes plongeurs, réalisé sous la forme d'un corps axial, présente sur un côté, ou sur les deux côtés, un tube plongeur (11; 11, 12).

16. Séparateur à chambre de turbulence suivant la revendication 12, caractérisé en ce que, dans chaque diffuseur (24), comportant une section rectangulaire, ou sensiblement rectangulaire, ou circulaire, est réalisée au moins une tôle déflectrice (36).

17. Séparateur à chambre de turbulence suivant l'une quelconque des revendications 1 à 16, caractérisé en ce que le raccord d'entrée (37) des gaz bruts dans la zone d'admission (38) de la chambre à turbulence est réalisé en forme de buse.
